# EUROPEAN PATENT SPECIFICATION

(11) **EP 1 536 542 B1**
(45) Date of publication and mention of the grant of the patent: **10.10.2012**
(21) Application number: 03788131.5
(22) Date of filing: 15.08.2003
(51) Int. Cl.: H02K 1/18

(54) **ROTATING ELECTRIC MACHINE**
ELEKTRISCHE DREHMASCHINE
MACHINE ELECTRIQUE ROTATIVE

(30) Priority: 16.08.2002 JP 2002237336
(43) Date of publication of application: 01.06.2005
(73) Proprietor: Yamaha Hatsudoki Kabushiki Kaisha, Iwata-shi, Shizuoka 438-8501 (JP)
(72) Inventor: NAITO, Shinya, YAMAHA HATSUDOKI K.K., Iwata-shi, Shizuoka 438-8501 (JP); HINO, Haruyoshi, YAMAHA HATSUDOKI K.K., Iwata-shi, Shizuoka 438-8501 (JP); ISHIHARA, Hiroyuki, YAMAHA HATSUDOKI K.K., Iwata-shi, Shizuoka 438-8501 (JP); MUROTA, Keiko, YAMAHA HATSUDOKI K.K., Iwata-shi, Shizuoka 438-8501 (JP); TERADA, Junji, YAMAHA HATSUDOKI K.K., Iwata-shi, Shizuoka 438-8501 (JP); ONO, Tomohiro, YAMAHA HATSUDOKI K.K., Iwata-shi, Shizuoka 438-8501 (JP)
(74) Representative: Grünecker, Kinkeldey, Stockmair & Schwanhäusser
(86) International application number: PCT/JP2003/010388
(87) International publication number: WO 2004/017488

(56) References cited:
- WO-A-02/49190
- JP-A- 11 098 724
- JP-A- 2001 238 377
- JP-A- 2001 309 582
- JP-A- 2003 111 318
- US-A- 2 236 291
- US-B1- 6 177 751

## Description

The invention relates to a dynamo-electric machine of axial gap type. In particular, the invention relates to a dynamo-electric machine comprising a magnet for a magnetic field, a tooth disposed so as to oppose the magnet at a predetermined gap, a coil having at least part of the tooth disposed therein, and a yoke having an opening wherein a portion of the tooth is inserted.

A radial gap electric motor as a radial gap dynamo-electric machine used for a drive source in a motorcycle or for other general electric motors has such a construction that a yoke of a rotor (rotor yoke) and a yoke of a stator (stator yoke) having a revolving shaft supported by bearings are opposed to each other, and the opposed surfaces extend in parallel with the revolving shaft. The opposed surface of the rotor yoke is provided with a magnet for a magnetic field in a cylindrical shape, and the opposed surface on the side of the stator is provided with a plurality of teeth arranged in a radial shape so as to oppose the cylindrical surface, and each tooth being wound by a coil. In other words, in the radial gap electric motor, the opposing surfaces of the magnet and the teeth extend in parallel with the revolving shaft, and the gap between the opposed surfaces is formed into a cylindrical shape along the revolving shaft. Such a radial gap electric machine can be taken from the prior art document US 6,177,751. Further prior art documents WO 02/49190 A1, JP 11-98724 A and JP 11-275830 discloses a stator for radial gap electric machine, wherein the teeth increases in cross sectional area in radial outward direction of the stator. Such configuration relates to the increase of the circumferential length of the tooth section in radial outward direction of the stator.

On the other hand, in recent years, an axial gap dynamo-electric machine as well as the above-described radial gap dynamo-electric machine attracts the public eye.

For example, in an axial gap electric motor such as axial gap dynamo-electric machine, a rotor yoke having a revolving shaft supported by the bearing thereof and a stator yoke, which is a laminated body formed by laminating, for example, disk-shaped steel plates along the revolving shaft of the motor, opposed with respect to each other, and the opposing surfaces thereof are orthogonal to the revolving shaft.

On the opposing surface of the rotor yoke, a magnet for magnetic field is disposed, for example, in a circular shape (or in a ring shape), and on the opposing surface on the stator yoke, there are disposed a plurality of teeth along the radial direction (in the directions of radii) to the revolving shaft. The opposing surfaces of the magnet and the teeth are orthogonal to the revolving shaft, and the gap between the opposing surfaces is formed into a plane perpendicular to the revolving shaft.

In other words, in an axial gap electric motor, a magnetic circuit is formed between the rotor and the stator, and the rotor is rotated using an attraction force and a repulsion force of the rotor-side magnet with respect to excitation of the respective teeth by sequentially switching excitation of the respective teeth corresponding to the N-pole and the S-pole of the rotor-side magnet via coils wound around the respective teeth of the stator.

In the above-described axial gap electric motor, a magnetic flux flowing from the teeth to the stator yoke by energization of the coils varies in direction or magnitude because the magnet on the rotor side rotates.

In this case, part of the magnetic flux flowing from the teeth to the stator yoke, which is leaked from the side surfaces of the teeth toward the stator yoke, proceeds perpendicularly to the rotor-opposed surface of the stator yoke.

Since the opposed surface of the stator yoke is orthogonal to the revolving shaft, and steel plates thereof are laminated in the direction along the revolving shaft, an induced current generated in whirls with respect to the magnetic flux component proceeded to the stator yoke in the orthogonal direction flows along the respective steel plates.

In other words, in the stator yoke, there is no obstacle that intercepts the induced current generated by the leaked magnetic flux, and thus a large magnitude of induced current may flow.

The induced current causes Joule heat, and the Joule heat increases loss (loss of iron) and causes lowering of the driving efficiency of the electric motor.

It is an object of the invention to provide an improved dynamo-electric machine of the axial gap type, wherein the generation of eddy current caused by the leaked magnetic flux is restrained and iron loss due to eddy current is reduced.

According to the present invention said object is solved by dynamo-electric machine of the axial gap type having the features of independent claim 1. Preferred embodiments are laid down in the dependent claims.

Accordingly, it is provided a dynamo-electric machine of the above kind, wherein a cross-sectional area perpendicular to a line of magnetic force when the coil is energized is larger at the portion of the tooth inserted into the opening of the yoke than a cross-sectional area perpendicular to the line of magnetic force at the part of the tooth stored in the coil.

Preferably, the tooth is laminated in parallel with a direction of magnetic flux of the magnet, and the yoke is laminated in a direction different from the laminating direction of the tooth, and/or in that the opening is provided at the yoke so as to face from the surface of the yoke opposing to the magnet toward the opposite surface of the yoke.

Further, preferably the tooth is formed by laminating a plurality of steel plates each including a first portion to be inserted into the opening, a second portion to be inserted in the coil, and a third portion connected to the second portion, and in that the length of the first portion in the direction perpendicular to the magnetic flux of the magnet is longer than the length of the second portion perpendicular to the magnetic flux of the magnet.

Furthermore, preferably a plurality of the teeth is provided, wherein the plurality of the teeth are mounted to the yoke in a manner in which the lines of magnetic force generated at the respective portions of the plurality of teeth stored within the coils when the coils are energized extend in parallel with each other.

Still further, preferably a cross-sectional area perpendicular to the line of magnetic force generated at the teeth at the magnet-opposed end portion of the tooth which opposes to the magnet when the coil is energized is smaller than the cross-sectional area perpendicular to the line of magnetic force at the teeth disposed in the coil or is smaller than the cross-sectional area perpendicular to the line of magnetic force at the teeth disposed in the yoke.

Also, preferably a plurality of coils are provided and a plurality of teeth are at least partly stored within the plurality of coils, in that the plurality of coils are integrally molded so that the lines of magnetic force at the respective portions of the plurality of teeth stored in the coils extend substantially in parallel with each other when the plurality of coils are energized.

Still further, preferably magnet-opposed end portions of the plurality of teeth opposing to the respective magnets are disposed outside the plurality of coils, respectively, and/or in that a plurality of cores disposed in the vicinity of the magnet-opposed end portions of the plurality of teeth opposing to the respective magnets are provided, and/or in that the plurality of the cores and the plurality of coils are integrally molded.

Preferably, it is provided a dynamo-electric machine, comprising a magnet for a magnetic field, a tooth disposed so as to oppose to the magnet at a predetermined gap; and a coil having at least a portion of the tooth disposed therein, wherein a cross-sectional area perpendicular to a line of magnetic force generated at a magnet-opposed end portion of the tooth opposing to the magnet is smaller than or equal to the cross-sectional area perpendicular to the line of magnetic force generated at the portion of the tooth disposed within the coil when the coil is energized.

Also, preferably a plurality of teeth and of coils are provided, wherein at least a portion of the respective teeth are stored within the corresponding coils, respectively, and/or in that the teeth are fixed to a yoke in a manner that lines of a magnetic force generated at the portions of the respective teeth stored in the coils extend substantially in parallel with each other when the coils are energized, and/or in that the respective coils are integrally molded in a manner that lines of a magnetic force generated at the portions of the respective teeth to be stored in the respective coils extend substantially in parallel with each other.

Further, preferably a plurality of cores are disposed in a vicinity of magnet-opposed end portions of teeth opposing to the respective magnets, and/or in that the magnet-opposed end portions of the teeth opposing to the magnets are disposed outside of a respective plurality of coils, and/or in that the plurality of cores and the plurality of coils are integrally molded.

Furthermore, preferably a yoke is provided with plural openings formed from a surface opposing the magnet toward the other surface thereof, wherein at least portions of the teeth are fixed to the opening, respectively, and/or in that a cross-sectional area of the respective teeth perpendicular to lines of magnetic force generated at the teeth disposed inside the opening are larger than a cross-sectional area perpendicular to the lines of magnetic force at the portion of the teeth stored within the respective coils when the respective coils are energized.

Further, preferably the direction of layer of the tooth is perpendicular to or parallel to a radial direction which is substantially perpendicular to an axis of rotation of the dynamo-electric machine.

Further preferred embodiments of the invention are subject to the respective subclaims.

In the following, the invention will be described in greater detail by means of preferred embodiments thereof with reference to the attached drawings, wherein:
- Fig. 1: is a side view of a motorcycle as an example of an apparatus on which an axial gap dynamo-electric machine according to a first embodiment is mounted;
- Fig. 2: is a cross sectional view (partly in side view) taken along the line II-II in Fig. 1 for explaining the inside of the rear end section of a rear arm shown in Fig. 1;
- Fig. 3: is a drawing of a stator in use mounted at the rear end section of the rear arm as part of an electric motor of the motorcycle shown in Fig. 1 and Fig. 2, when viewed from the rear wheel side;
- Fig. 4: is a perspective view showing a general construction of the principal portion of the stator shown in Fig. 3;
- Fig. 5A: is a perspective view showing a general construction of a tooth and a portion of a stator yoke where the tooth is mounted according to the first embodiment;
- Fig. 5B: is a drawing showing the teeth in Fig. 5A when viewed in the direction of lamination;
- Fig. 6A: is a drawing showing a cross-sectional area of the tooth shown in Fig. 5 at the portion being inserted into the yoke, which is taken perpendicularly with respect to a line of magnetic force generated when a coil is energized;
- Fig. 6B: is a drawing showing a cross-sectional area of a portion of the tooth shown in Fig. 5 disposed within the coil, which is taken perpendicularly with respect to the line of magnetic force;
- Fig. 7A: is a perspective view of a general construction of a tooth having a width of the portion to be inserted into the yoke along the shorter side thereof when viewed in the direction of lamination lower than a corresponding width at the portion to be disposed within the coil, and portion of the tooth mounted to the stator yoke;
- Fig. 7B: is a drawing of the teeth in Fig. 7A when viewed in the direction of lamination;
- Fig. 8A: is a perspective view showing a general construction of a tooth and a portion of the stator yoke where the tooth is mounted according to a second embodiment;
- Fig. 8B: is a drawing of the tooth in Fig. 8A when viewed in the direction of lamination;
- Fig. 9A: is a perspective view showing a general construction of a tooth and a portion of the stator yoke where the tooth is mounted according to a third embodiment;
- Fig. 9B: is a drawing of the tooth in Fig. 9A when viewed in the direction of lamination;
- Fig. 10A: is an exploded perspective view showing an assembling process of a stator including the tooth (only the portion including the single tooth) shown in Fig. 9;
- Fig. 10B: is an exploded perspective view showing an assembling process of a stator including the tooth shown in Figs. 7A, 7B (only the portion including the single tooth);
- Fig. 11: is a perspective view showing a general construction of a molded integral coil according to the third embodiment;
- Fig. 12: is an exploded perspective view showing an assembling process of a stator employing the molded integral coil shown in Fig. 11; and
- Fig. 13: is a perspective view showing a general construction of the molded integral coil according to a modification of the third embodiment.

Referring now to attached drawings, embodiments of a dynamo-electric machine according to the present invention will be described.

### (First Embodiment)

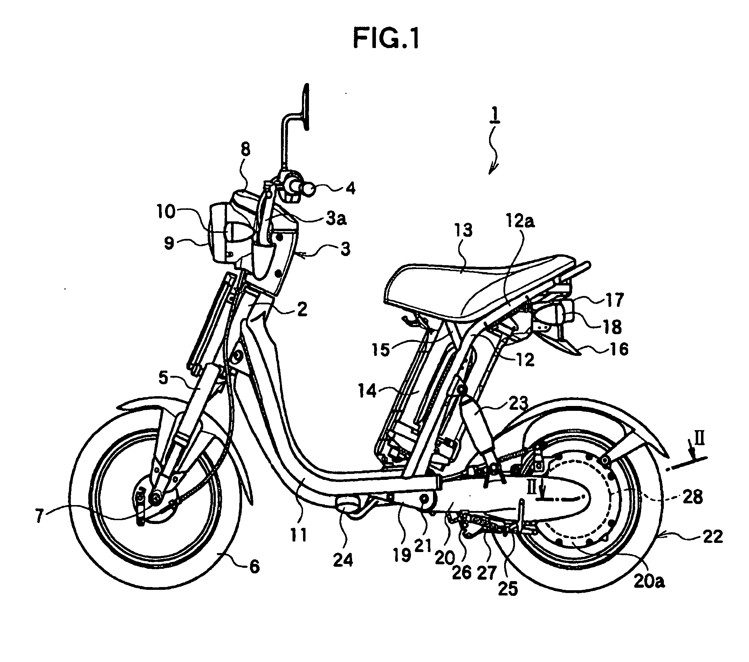

Fig. 1 is a side view of a motorcycle 1 as an example of an apparatus on which an axial gap dynamo-electric machine according to a first embodiment is mounted.

As shown in Fig. 1, the motorcycle 1 includes a head pipe 2 at the upper front of a vehicle body, and the head pipe rotatably accommodates a steering shaft, not shown, for changing the direction of the vehicle body therein. A handle supporting member 3 on which a handle 3a is fixed is mounted at the upper end of the steering shaft, and grips 4 are mounted to both ends of the handle 3a. A right (far side of Fig. 1) grip 6, not shown, constitutes a rotatable throttle grip.

A pair of left and right front forks 5 are mounted to the head pipe 2 downward from the lower end thereof. At the respective lower ends of the front forks 5, a front wheel 6 is mounted via a front axle 7, and the front wheel 6 is rotatably supported by the front axle 7 in a state of being suspended by the front forks 5 in a damping manner. A meter 8 is disposed on the handle supporting member 3 in front of the handle 3a, and a head lamp 9 is fixed to the handle supporting member 3 below the meter 8. Flasher lamps 10 (only one of them is shown in Fig. 1) are disposed on both sides of the headlamp 9.

A pair of left and right vehicle body frames 11 each formed into a substantially L-shape in side view extend from the head pipe 2 rearwardly of the vehicle body. The vehicle body frames 11 are round pipes, and extend from the head pipe 2 rearward and obliquely downward from the head pipe 2, and then horizontally toward the rear so as to be formed substantially into the L-shape in side view.

From the rear end sections of the pair of vehicle body frames 11, a pair of left and right seat rails 12 extend rearward and obliquely upward, and then rear end sections 12a of the seat rails 12 are bent rearward along the shape of a seat 13.

Between the pair of left and right seat rails 12, there is provided a battery 14 so as to be detachable, and the battery 14 accommodates a plurality of secondary chargeable batteries.

In the vicinity of the bent portions of the pair of left and right seat rails 12, a seat stay 15 formed into an inverted U-shape is welded so as to be inclined upward toward the front with respect to the vehicle body, and the seat 13 is disposed at the portion surrounded by the seat stay 15 and the left and the right seat rails 12 so as to be openable and closable, that is, so as to be capable of pivoting in the vertical direction about the front end of the seat 13.

A rear fender 16 is mounted to the rear ends of the seat rails 12, and a tail lamp 17 is mounted to the rear surface of the rear fender 16. In addition, flash lamps (only one of them is shown in Fig. 1) 18 are mounted on the left and the right of the tail lamp 17.

On the other hand, rear arm brackets 19 (only one of them is shown in Fig. 1) are welded to the horizontal portions of the pair of left and right vehicle body frames 11 below the seat 13, respectively, and the front ends of rear arms 20 are pivotably supported by the pair of left and right rear arm brackets 19 via a pivot shaft 21. A rear wheel 22, which is a driving wheel, is rotatably supported by a rear end section 20a of the rear arm 20, and the rear arm 20 and the rear wheel 22 are suspended by a rear cushion 23 in a damping manner.

A pair of left and right footsteps 24 (only one of them is shown in Fig. 1) are disposed below the horizontal portions of the left and the right vehicle body frames 11, respectively, and a side stand 25 is supported by the left rear arm 20 so as to be capable of rotating via a shaft 26 behind the footstep 24. The side stand 25 is urged toward the dosing side by a return spring 27.

A drive unit 29 including an axial gap electric motor 28 (hereinafter, may be referred simply as electric motor 28) connected to the rear wheel 22 for rotating the rear wheel 22 is mounted in the rear end section 20a of the rear arm 20.

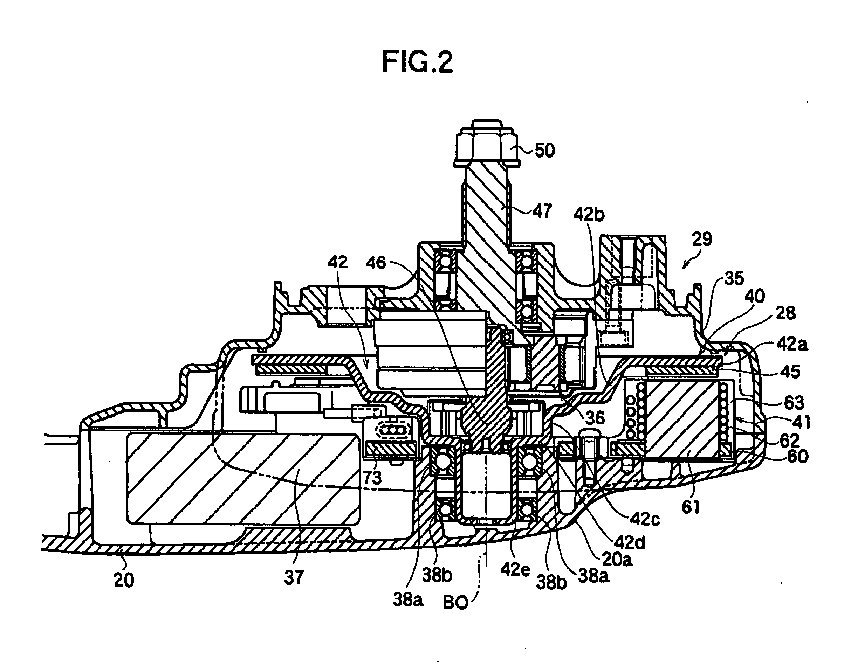

Fig. 2 is a cross-sectional view (partly in side view) taken along the line II-II in Fig. 1 for explaining the inside of the rear end section 20a of the rear arm 20. The rear wheel 22 is not shown.

As shown in Fig. 2, a gear cover 35 covers the right side surface of the rear end section 20a of the rear arm 20, and the electric motor 28 that constitutes the drive unit 29, a planet gear speed reducer 36, a controller 37, and so on are integrally assembled within a space formed therein.

The axial gap electric motor 28 includes, as shown in Fig. 2, a rotor 40 supported at the rear end section 20a of the rear arm 20 via bearings 38a, 38b so as to be rotatable about a center axis BO of the bearings 38a, 38b, and a stator 41 of substantially ring (doughnut) shape fixed to the inner surface of the rear end section 20a of the rear arm so as to oppose the rotor 40.

The rotor 40 includes, as shown in Fig. 2, a rotor yoke 42, and the rotor yoke 42 is shaped like a spinning top projecting toward the rear end section 20a of the rear arm 20.

In other words, the rotor yoke 42 includes a ring-shaped portion 42a of a ring shape opposing the stator 41, a tapered portion 42b extending in a substantially tapered shape (substantially conical shape) from the inner peripheral edge of the ring-shaped portion 42a toward the rear end section 20a of the rear arm 20, a first cylindrical portion 42c extending from the side peripheral edge of the rear end section 20a of the rear arm of the tapered portion 42b toward the rear end section 20a along the center axis BO in the projecting manner, a ring-shaped portion 42d extending radially inwardly from the side peripheral edge of the cylindrical portion 42c on the side of the rear end section 20a of the rear arm, and a second cylindrical portion 42e extending from the inner peripheral edge of the ring-shaped portion 42d toward the rear end section 20a along the center axis BO in a projecting manner.

The second cylindrical portion 42e is rotatably supported via the bearings 38a, 38b about the center axis BO, to construct a revolving shaft 42e of the rotor 40. Therefore, the center of rotational axis of a revolving shaft 42e of the rotor 40 corresponds to the center axis BO of the bearings 38a, 38b.

The rotor 40 is fixed to the ring-shaped portion 42a of the rotor yoke 42 on the surface opposing the stator 41, and is provided with a magnet 45 for magnetic field, being formed into a ring shape which is coaxial with the center axis BO.

The magnet 45 includes N-poles and S-poles disposed alternately along the circumference thereof.

A revolving shaft 46 is connected to the revolving shaft 42e of the rotor 40 at the end on the rear wheel side coaxially with the rotor 40 (revolving shaft 42e), and the revolving shaft 46 is rotatable integrally with the rotor 40.

On the other hand, the planet gear speed reducer 36 is connected to the revolving shaft 46, and is assembled in the tapered portion 42b of the rotor yoke 42. The planet gear speed reducer 36 and the electric motor 28 are partly overlapped with each other in the direction of the width of the vehicle.

The planet gear speed reducer 36 is connected to a rear axle 47 disposed coaxially with the revolving shaft 46, and has a function to reduce the speed of rotation (rotation of the revolving shaft 46) of the electric motor 28 and to transmit it to the rear axle 47. A nut 50 is detachably screwed on an extremity of the rear axle 47 projecting from the gear cover 35, and the rear wheel 22 is mounted and fixed to the rear axle 47 by screwing the nut 50 thereon with the rear wheel 22 fitted on the rear axle 47.

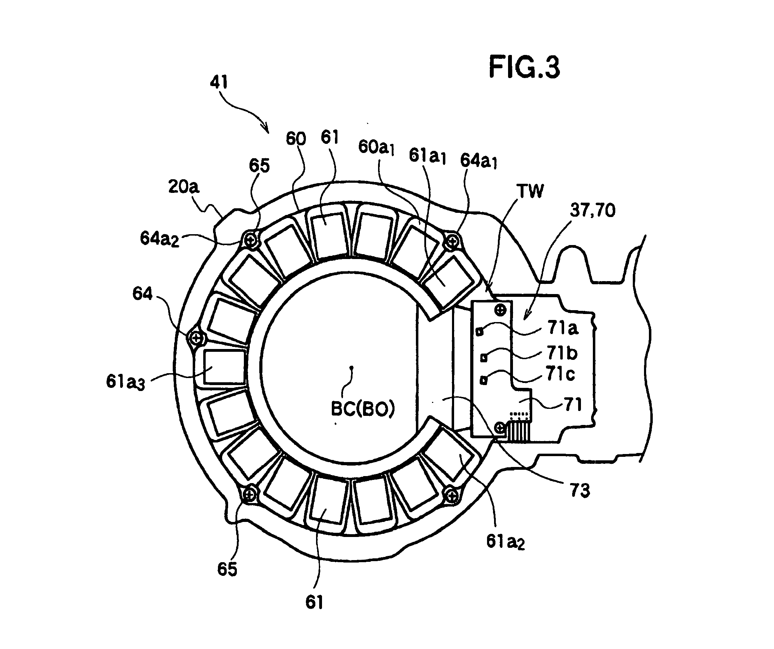

Fig. 3 is a drawing of the stator 41 in use mounted at the rear end section 20a of the rear arm 20 as part of the electric motor 28 of the motorcycle 1 shown in Fig. 1 and Fig. 2, when viewed from the rear wheel side.

As shown in Fig. 2 and Fig. 3, the stator 41 is fixed to the rear end section 20a of the rear arm 20, and includes a layered stator yoke 60 formed by laminating steel plates each being formed substantially into the shape of a partly removed circle (ring) (substantially C-shape) having a midpoint thereof on the center axis BO of the bearings 38a, 38b along the center axis and a plurality of teeth 61 facing the magnet 45 at a predetermined gap and each being formed of laminated steel plates.

The plurality of teeth 61 are disposed on the surface of the stator yoke 60 so as to oppose the magnet 45 in substantially a partly removed circular shape (substantially C-shape) having a midpoint on the center axis BO of the bearings 38a, 38b.

The "partly removed circle" in the present embodiment represents a substantially complete round-shape or a substantially oval shape, part of which is removed.

In other words, the plurality of teeth 61 disposed substantially into the shape of a partly removed circle (substantially C-shape) in the present embodiment are disposed on the stator yoke 60 circumferentially at regular intervals (circumferential pitches), and three teeth corresponding to the three phases (U-phase, V-phase, and W-phase) are missing in comparison with the case in which the plurality of teeth 61 are disposed in the shape of a complete circle.

The circumferential pitch represents an angle formed between line segments connecting the centers of the magnet-opposed surfaces of the adjacent teeth 61 with the center axis BO of the bearings 38a, 38b along the opposed-surfaces, respectively.

The stator 41 includes a coil 62 (See Fig. 2) wound around each tooth 61, the stator yoke 60,a molded portion 63 formed by integrally molding each tooth 61 and the coil 62, and a plurality of flanges 64 formed on the outer peripheral surface of the molded portion 63 for mounting the molded portion 63 including the teeth 61 and the coils 62 to the rear end section 20a of the rear arm 20. The flange 64 is fixed to the rear end section 20a of the rear arm by screwing a bolt 65.

A controller 37 and an inverter 70 connected to the controller 37 and electrically connected to the respective coils 62 for switching and allowing a current to flow through the coils 62 (U-phase coil, V-phase coil, and W-phase coil) under control of the controller 37 are disposed at the portion on which the teeth 61 are missing (removed portion) TW on the stator yoke 60. Reference numeral 71 designates an encoder substrate for detecting the rotational position of the rotor 40, and reference numerals 71a, 71b, 71c designate holes IC corresponding to the respective phases.

In addition, as shown in Fig. 3, opposed inner peripheral portions of both ends 60a1 and 60a2 on the side of the removed portion TW of the stator yoke 60 are connected with a connecting yoke 73.

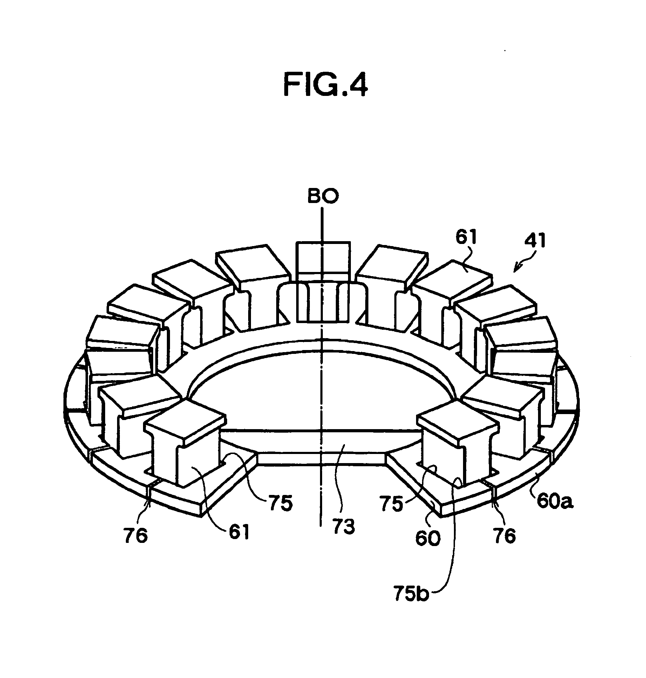

Fig. 4 is a perspective view showing a general construction of the principal portion of the stator shown in Fig. 3.

As shown in Fig. 4, the stator yoke 60 is formed with square insertion holes 75 for inserting (fitting) and fixing the teeth 61 substantially in the shape of a partly removed circle (substantially C-shape) at the predetermined circumferential pitches, and inner surfaces 75a, 75b on a pair of shorter sides of the insertion holes 75 face the center axis BO (orthogonal to the radial direction of the stator yoke 60).

In addition, the inner surface 75b on the side of an outer peripheral surface 60a of the stator yoke 60 out of the inner surfaces 75a, 75b on the shorter sides of the insertion hole 75 is formed with a radially extending slit 76 that is formed by cutting the steel plate portion between the inner surface 75b and the outer peripheral surface 60a for communicating the insertion hole 75 with the outside of the stator yoke 60.

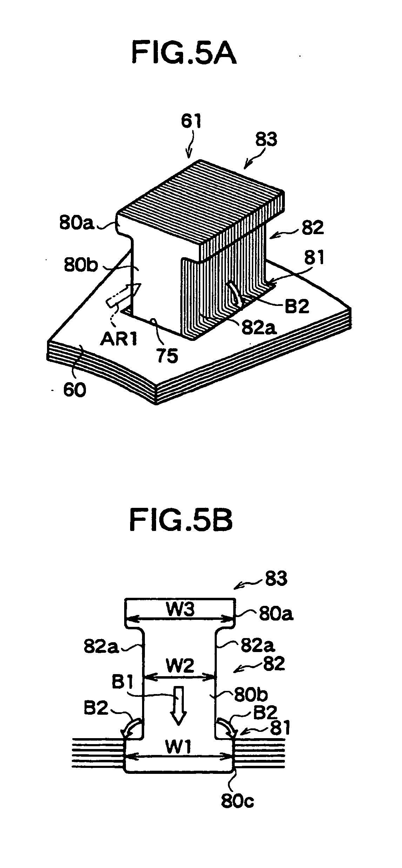

On the other hand, each of the teeth 61 is constructed by laminating a plurality of steel plates 80 in substantially I-shape as shown in Fig. 4 and Figs. 5A and 5B.

In other words, each of the steel plates 80 includes one end portion 80a having a predetermined width W3 along the shorter side of the steel plate 80, and .a predetermined length along the longitudinal direction of the steel plate 80, a midsection 80b extending from the one end portion 80a along the longitudinal direction by a predetermined length and having a width W2 which is narrower (shorter) than the width of the one end portion 80a along the shorter side, and the other end portion 80c extending from the end on the opposite side of the midsection 80b relative to the one end portion 80a along the longitudinal direction, and having a predetermined with W1 along the shorter side.

The width W1 of the other end portion 80c of the steel plate 80 is substantially the same as the length of the inner surface of the shorter side of the insertion hole 75. The width W1 and W3 may either be the same or different.

The portion formed by laminating the other end portions 80c of the plurality of steel plates 80 which constitute the tooth 61 has a substantially square cross section along the direction of lamination, and is inserted (for example, press-fitted) into the insertion hole 75 of the stator yoke 60 in the direction in which the direction of lamination matches the radial direction and fixed thereto. The portion formed by laminating the other end portion 80c of the tooth 61 constitutes a portion 81 to be inserted into the yoke.

The portion formed by laminating the midsections 80b of the plurality of steel plates 80 constituting the tooth 61, corresponding to the portion to be disposed within the coil 62 (that is, the portion on which the coil 62 is wound), has a substantially square cross section along the direction of lamination and constitutes a portion 82 to be disposed within the coil.

The portion formed by laminating the one end portion 80a of the plurality of steel plates 80 constituting the tooth 61, corresponding to the portion including a square shaped opposed surface opposing to the magnet 45 at a predetermined gap, is disposed outside the coil 62 and constitutes an end portion 83 on the side of the predetermined gap (magnet-opposed side) of the tooth 61.

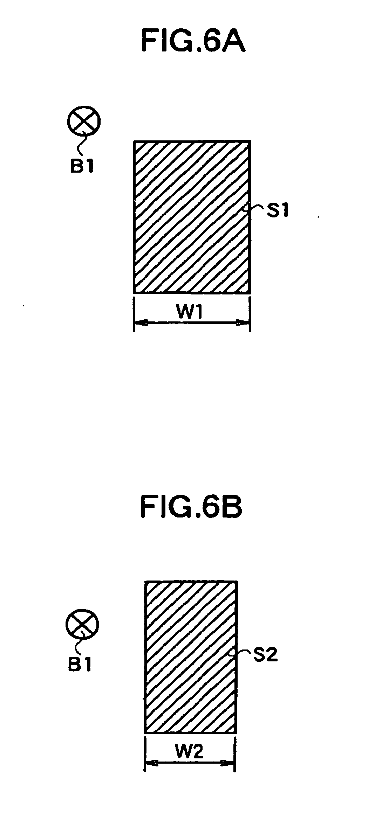

In other words, in this arrangement, as shown in Figs. 6A and 6B. a cross-sectional area (the area of the square cross section) S1 of the portion 81 of the tooth 61 to be inserted into the yoke, which is taken perpendicularly with respect to the lines of magnetic force (the direction of a magnetic flux B1) generated when the coil 62 is energized, is larger than the cross-sectional area (the area of the square cross section) S2 of the portion 82 to be disposed within the coil with respect to the lines of the magnetic force (the direction of magnetic flux B1).

In this arrangement, the plurality of teeth 61 are mounted to the stator yoke 60 in a state in which the lines of magnetic force (the direction of magnetic flux B1) generated at the portions 82 to be disposed within the coils of the plurality of teeth 61 extend substantially parallel with each other when the coils 62 corresponding to the respective teeth 61 are energized.

Subsequently, the operation of the electric motor 28 having the above-described construction will be described while focusing the operation based on the construction of the stator 41.

In the electric motor 28, a magnetic circuit is formed between the rotor 40 and the stator 41, and the magnetic flux B1 output from the N-pole of the magnet 45 on the rotor 40 flows through the magnet-opposed end portion 83, the portion 82 to be disposed within the coil, and the portion 81 to be inserted into the yoke of the tooth 61 to the stator yoke 60, and then to the S-pole of the magnet 45 via other teeth 61.

In this case, because of the geometric configuration of the tooth 61 or increase of magnetic resistance at the portion to be inserted into the yoke, a leaked magnetic flux B2 generates from both of side surfaces 82a, when viewed in the direction of lamination (See an arrow AR1) of the portion 82 of the tooth 61 disposed within the coil toward the stator yoke 60, in addition to the magnetic flux B1.

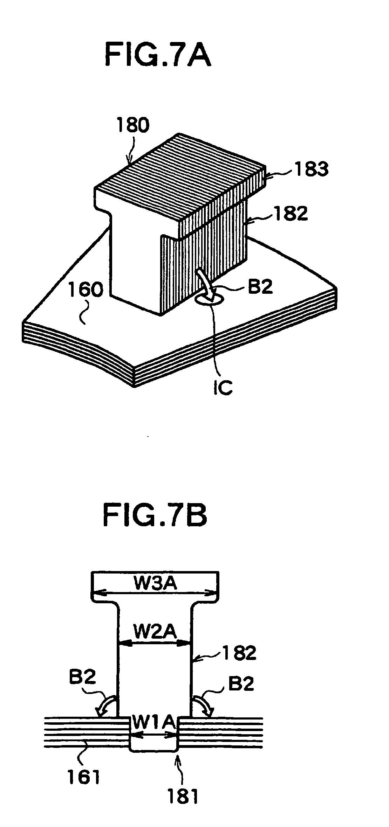

In this point, for example, as shown in Fig. 7A and Fig. 7B, a width W1A along the shorter side of a portion 181 of teeth 180 to be inserted into the yoke along the shorter side thereof when viewed in the direction of lamination is shorter than a width W2A corresponding to a portion 182 to be disposed within the coil, the leaked magnetic flux B2 proceeds perpendicularly to the rotor-opposed surface of a stator yoke 160.

In this case, since the steel plates of the stator yoke 160 are laminated along the direction of the revolving shaft, an induction current IC generated in whirl with respect to the component of the magnetic flux proceeded perpendicularly to the stator yoke 160 is not blocked in the stator yoke 160, and thus a large magnitude of induction current leaks.

However, according to the embodiment, since the cross-sectional area S1 orthogonal to the line of magnetic force B1 of the portion 81 to be inserted into the yoke (the width W1 along the shorter side thereof when viewed in the direction of lamination) is larger (longer) than the cross-sectional area S2 orthogonal to the line of magnetic force B1 of the portion 82 to be disposed within the coil (the width W2 along the shorter side thereof when viewed in the direction of lamination), the magnetic flux B2 leaked from both of the side surfaces 82a of the portion 82 to be disposed within the coil of the tooth 61 when viewed in the direction of lamination proceeds perpendicularly to the portion 81 to be inserted into the yoke having the width W1 as described above, but not to the stator yoke 60.

In this case, since the direction of lamination of the tooth 61 including the portion 81 to be inserted into the yoke is a direction orthogonal to the magnetic flux B2, the induction current generated in whirl with respect to the component of the magnetic flux B2 tends to flow in the direction of lamination of the portion 81 to be inserted into the yoke (the direction from the backside to the front side, and the front side to the backside of the plane of Fig. 5B).

However, since the induction current is blocked by the insulation resistance among the laminated steel plates 80, the induction current is hardly generated.

When the coil 62 of a predetermined tooth 61 is energized in a state in which generation of the induction current caused by the leaked magnetic flux 82 is restrained as described above, the predetermined tooth 61 is energized via the coil 62, and attraction and repulsion occurs between the energized predetermined tooth 61 and the magnet 45. Therefore, by sequentially switching the teeth 61 to be energized via the controller 37 and the inverter 70, the teeth 61 to be energized may be shifted sequentially so that the rotor 40 is rotated with the magnet 45.

As described thus far, according to the embodiment, since generation of eddy current (induction current) caused by leaked magnetic flux may be restrained, iron loss due to the eddy current in the electric motor 28 may be reduced and thus the driving efficiency of the electric motor 28 may be improved.

### (Second Embodiment)

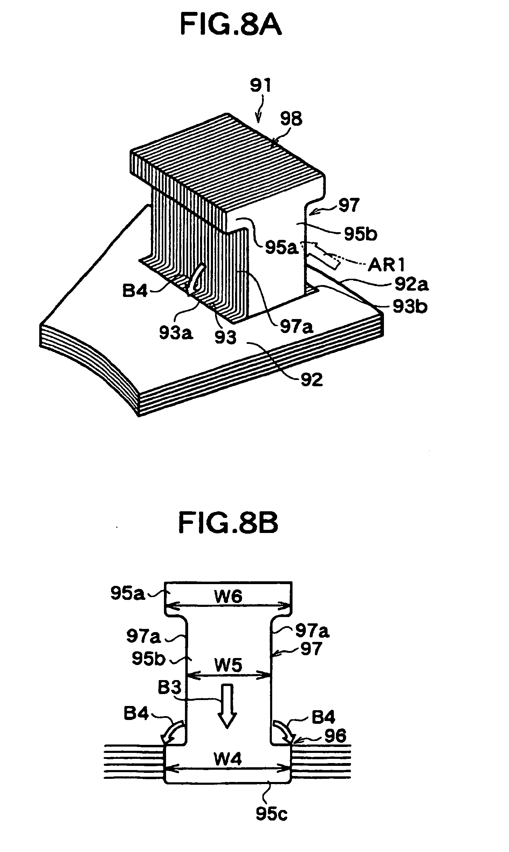

Fig. 8A is a perspective view showing a general construction of a tooth 91 and a portion of a stator yoke 92 where the tooth is mounted according to the embodiment, and Fig. 8B is a drawing of the tooth 91 in Fig. 8A when viewed in the direction of lamination.

Since the components other than the tooth 91 and the stator yoke 92 are substantially the same as the first embodiment, the description will be omitted or made only briefly.

As shown in Fig. 8A, the stator yoke 92 is formed with square insertion holes 93 for inserting (fitting) and fixing the respective teeth 91 substantially in the shape of a partly removed circle (substantially C-shape) at predetermined circumferential pitches, and a pair of longitudinal inner surfaces 93a, 93b of each of the insertion holes 93 face the center axis BO.

In addition, the inner surface 93b on the side of the outer peripheral surface 91 a of the stator yoke 92 out of the longitudinal inner surfaces 93a, 93b of each of the insertion holes 93 is formed with a radially extending slit, (not shown), that is formed by cutting the steel plat portion between the inner surface 93b and the outer peripheral surface 92a of the yoke for communicating the insertion hole 93 with the outside of the stator yoke 92.

On the other hand, each of the teeth 91 is constructed by laminating a plurality of steel plates 95 in substantially I-shape as shown in Fig. 8A and Fig. 8B.

In other words, each of the steel plates 95 includes one end portion 95a having a predetermined width W6 along the shorter side of the steel plate 95 and a predetermined length along the longitudinal side of the steel plate 95, a midsection 95b extending from the one end portion 95a along the longitudinal direction by a predetermined length and having a width W5 which is narrower than the width of the one end portion 95a along the shorter side, and the other end portion 95c extending from the end on the opposite side of the midsection 95b relative to the one end portion 95a along the longitudinal direction, and having a predetermined with W4 along the shorter side.

The width W4 of the other end portion 95c of the steel plate 95 is substantially the same as the length of the inner surface of the shorter side of the insertion hole 93. The width W4 and W6 may either be the same or different.

In the embodiment, the portion formed by laminating the other end portions 95c of the plurality of steel plates 95 which constitute the tooth 91 has a substantially square cross section along the direction of lamination, and is inserted and fixed into the insertion hole 93 of the stator yoke 92 in the direction in which the direction of lamination is orthogonal to the radial direction. The portion formed by laminating the other end portion 95c of the tooth 91 constitutes a portion 96 to be inserted into the yoke.

The portion formed by laminating the midsections 95b of the plurality of steel plates 95 constituting the tooth 91, corresponding to the portion to be disposed within the coil 62, has a substantially square cross section along the direction of lamination and constitutes the portion 97 to be disposed within the coil.

The portion formed by laminating the one end portion 95a of the plurality of steel plates 95 constituting the tooth 91, corresponding to the portion including a square shaped opposed surface opposing to the magnet 45 at a predetermined gap, is disposed outside the coil 62 and constitutes a magnet-opposed end portion 98 of the tooth 91.

In this arrangement as well, as in the first embodiment, the cross-sectional area S4 of the portion 96 of the tooth 91 to be inserted into the yoke, which is taken perpendicularly with respect to the lines of magnetic force (the direction of a magnetic flux B3) generated when the coil 62 is energized, is larger than the cross-sectional area S5 of a portion 97 to be disposed within the coil, which is taken perpendicularly with respect to the lines of magnetic force (the direction of magnetic flux B3).

In this arrangement as well, as in the first embodiment, the plurality of teeth 91 are mounted to the stator yoke 92 in a state in which the lines of magnetic force (the direction of magnetic flux B3) generated at the portions 97 to be disposed within the coils of the plurality of teeth 91 are substantially parallel with each other when the coils 62 corresponding to the respective teeth 91 are energized, and integrally fixed by the molded portion 63.

Subsequently, the operation of the electric motor 28 having the above-described construction will be described while focusing the operation based on the construction of the stator 41.

In this embodiment as well, as in the first embodiment, a leaked magnetic flux B4 generates from both side surfaces 97a, when viewed in the direction of lamination. (See a direction indicated by an arrow AR1), of the portion 97 of the tooth 91 disposed within the coil toward the stator yoke 92, in addition to the magnetic flux B3 generated at the portions 97 to be disposed in within the coils.

In this case, according to the present embodiment, since the cross-sectional area (the width W4 along the shorter side when viewed in the direction of lamination) of the portion 96 to be inserted into the yoke, which is taken perpendicularly with respect to the magnetic flux B3 is larger (longer) than the cross-sectional area (the width W5 along the shorter side when viewed in the direction of lamination) of the portion 97 to be disposed within the coil, which is taken perpendicularly with respect to the magnetic flux B3, the magnetic flux B4 leaked from the both side surfaces 97a of the portion 97 of the tooth 91 to be disposed in the coil when viewed in the direction of lamination proceeds perpendicularly to the portion 96 to be inserted into the yoke having the width W4, but not to the stator yoke 92.

In this case, since the direction of lamination of the tooth 91 including the portion 96 to be inserted into the yoke is a direction orthogonal to the magnetic flux B4, the induction current generated in whirl with respect to the component of the magnetic flux B4 tends to flow in the direction of lamination of the portion 96 to be inserted into the yoke (the direction from the backside to the front side, and the front side to the backside of the plane of Fig. 8B).

However, since the induction current is blocked by the insulation resistance among the laminated steel plates 95, the induction current is hardly generated.

As a consequence, according to the second embodiment, as in the first embodiment, since generation of eddy current (induction current) caused by leaked magnetic flux may be restrained, iron loss due to the eddy current in the electric motor 28 may be reduced and thus the driving efficiency of the electric motor 28 may be improved.

### (Third Embodiment)

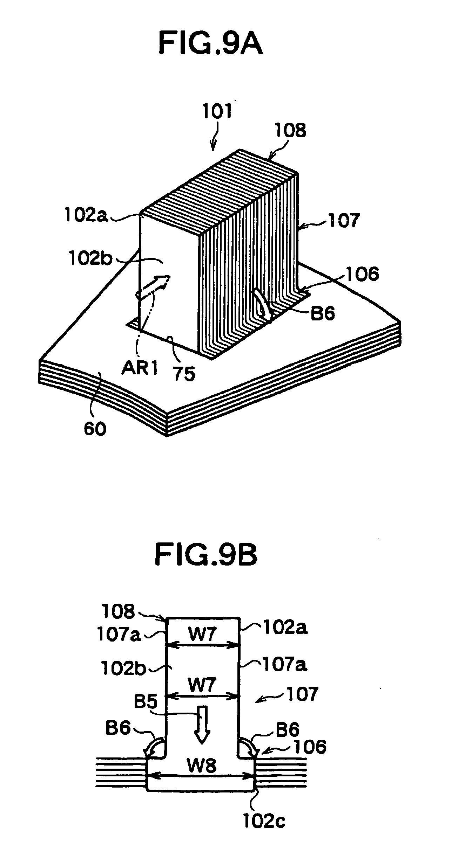

Fig. 9A is a perspective view showing a general construction of a tooth and the portion of a stator yoke where the tooth is mounted according to a third embodiment, and Fig. 9B is a drawing of the tooth in Fig. 9A when viewed in the direction of lamination.

Since the components other than teeth 101 are substantially the same as in the first embodiment, description will be omitted or made only briefly.

In the third embodiment, as shown in Fig. 9A and Fig. 9B, each of the teeth 101 is constructed by laminating a plurality of steel plates 102 of substantially inverted T-shape.

Each of the steel plates 102 includes one end portion 102a having a predetermined width W7 along the shorter side of the steel plate 102 and a predetermined length along the longitudinal side of the steel plate 102, a midsection 102b extending from the one end portion 102a along the longitudinal direction by a predetermined length and having the width W7 which is the same as the width of the one end portion 95a along the shorter side, and the other end portion 102c extending from the end on the opposite side of the midsection 102b relative to the one end portion 102a by a predetermined length along the longitudinal direction, and having a predetermined width W8 which is longer than the width W7 along the shorter side.

The width W8 of the other end portion 102c of the steel plate 102 is substantially the same as the length of the inner surface of the shorter side of the insertion hole 75.

In the embodiment, the portion formed by laminating the other end portions 102 of the plurality of steel pates 102 constituting the tooth 101 has a substantially square cross section along the direction of lamination, and is inserted and fixed into the insertion hole 75 of the stator yoke 60 in the direction in which the direction of lamination matches the radial direction. The portion formed by laminating the other end portion 101 c of the tooth 101 constitutes a portion 106 to be inserted into the yoke.

The portion formed by laminating the midsections 102b of the plurality of steel plate 102 constituting the tooth 101, corresponding to the portion to be disposed within the coil 62, has a substantially square cross section along the direction of lamination and constitutes a portion 107 to be disposed within the coil.

In addition, the portion formed by laminating the one end portions 102a of the plurality of steel plates 102 constituting the tooth 101, corresponding to the portion including a square shaped opposed surface opposing to the magnet 45 at a predetermined gap, is disposed outside the coil 62 and constitutes a magnet-opposed end portion 108 of the tooth 101.

In this arrangement as well, as in the first embodiment, the cross-sectional area of the portion 106 of the tooth 101 to be inserted into the yoke, which is taken perpendicularly with respect to the lines of magnetic force (the direction of the magnetic flux B5) generated when the coil 62 is energized, is larger than the cross-sectional area of the portion 107 to be disposed within the coil, which is taken perpendicularly with respect to the lines of magnetic force (the direction of magnetic flux B5).

In this arrangement, the cross-sectional area of the magnet-opposed end portion 108 of the tooth 101 opposing to the magnet 45, which is taken perpendicularly with respect to the lines of magnetic force (the direction of the magnetic flux B5) generated when the coil 62 is energized, is equal to the cross-sectional area of the portion 107 to be disposed within the coil (the direction of the magnetic flux B5).

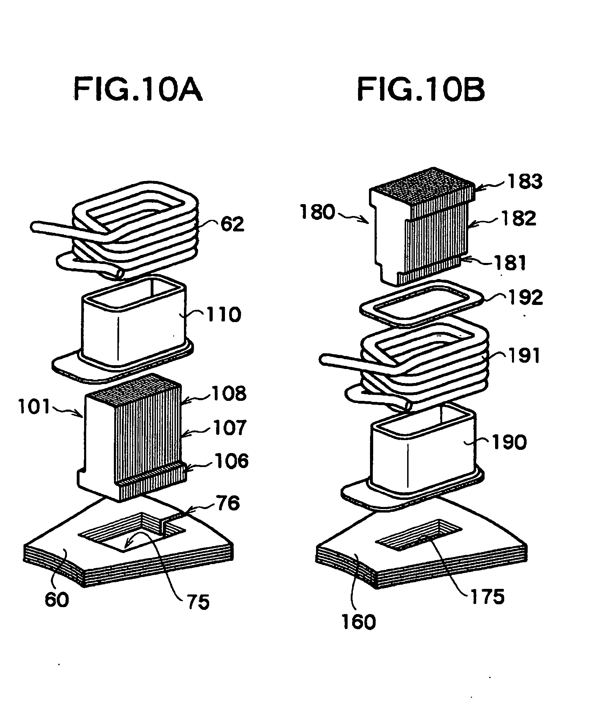

Fig. 10A is an exploded perspective view showing an assembling process of the stator 41 including the tooth 101 (only the portion including the single tooth).

As shown in Fig. 10A, the portion 106 of the tooth 101 to be inserted into the yoke is inserted (for example, press-fitted) and fixed into the insertion hole 75 of the stator yoke 60, on which the insertion holes 75 and the slits 76 are formed in advance, while aligning the portion 106 to be inserted into the yoke accurately with the insertion hole 75.

Then the stator 41 is assembled by placing a hollow bobbin 110 formed of an insulating material on the stator yoke 60 so that the portion 107 of the tooth 101 to be disposed in the coil is disposed within the hollow portion thereof, then winding the coil 62 on the outer peripheral side of the bobbin 110 (or attaching the coil 62 which is wound in advance on the outer peripheral surface of the bobbin), and fixing the coil 62, the bobbin 110, the tooth 101, and the stator yoke 60 with resin molding portion 63.

In this arrangement as well, as in the first embodiment, the plurality of teeth 101 are mounted on the stator yoke 60 in a state in which the lines of magnetic force (the direction of magnetic flux B5) generated at the portions 107 to be disposed within the coils of the plurality of teeth 101 extend substantially parallel with each other when the coils 62 corresponding to the respective teeth 101 are energized.

Subsequently, the operation of the electric motor 28 having the above-described construction will be described while focusing the operation based on the construction of the stator 41.

As in the first embodiment, in addition to the magnetic flux B5 generated at the portions 107 to be disposed within the coils, a leaked magnetic flux B6 is generated toward the stator yoke 60 from both side surfaces 107a, when viewed in the direction of lamination (see a direction indicated by an arrow AR1), of the portion 107 of the tooth 101 disposed within the coil.

In this case, according to the present embodiment, since the cross-sectional area (the width W8 along the shorter side when viewed in the direction of lamination) of the portion 106 to be inserted into the yoke, which is taken perpendicularly with respect to the magnetic flux B5, is larger (longer) than the cross-sectional area (the width W7 along the shorter side when viewed in the direction of lamination) of the portion 107 to be disposed within the coil, which is taken perpendicularly with respect to the magnetic flux B5, the magnetic flux B6 leaked from the both side surfaces 107a of the portion 107 of the tooth 101 to be disposed in the coil when viewed in the direction of lamination proceeds perpendicularly to the portion 106 to be inserted into the yoke having the width W8, but not to the stator yoke 60.

In this case, since the direction of lamination of the tooth 101 including the portion 106 to be inserted into the yoke is the direction orthogonal to the magnetic flux B6, the induction current generated in whirl with respect to the component of the magnetic flux B6 tends to flow in the direction of lamination of the portion 106 to be inserted into the yoke (the direction from the backside to the front side, and the front side to the backside of the plane of Fig. 9B).

However, since the induction current is blocked by the insulation resistance among the laminated steel plates 102, the induction current is hardly generated.

As a consequence, according to the present embodiment, as in the first embodiment, since generation of eddy current (induction current) caused by the leaked magnetic flux may be restrained, iron loss due to the eddy current in the electric motor 28 may be reduced and thus the driving efficiency of the electric motor 28 may be improved.

In the teeth 101 of the stator 41 according to the embodiment, as shown in Fig. 9A and Fig. 9B, the area and the width W7 of the magnet-opposed end portion 108 disposed outside the coil 62 are the same as the area and the width W7 of the portion 107 to be disposed in the coil, respectively.

In this point, as shown in Fig. 7A and Fig. 7B, when a width W3A along the shorter side of a magnet-opposed end portion 183 of the tooth 180 when viewed in the direction of lamination is longer than a corresponding width W2A of a portion 182 to be disposed in the coil, as shown in Fig. 10B, the tooth 180 is inserted into a bobbin 190 on which a coil 191 is wound around the outer periphery thereof via a bobbin flange 192, and then the bobbin 190 in which the tooth 180 is inserted is mounted to the stator yoke 60 in such a manner that the portion 181 of the tooth 180 to be inserted into the yoke is inserted (press-fitted) into an insertion hole 175 on the stator yoke 160.

However, with the assembly described above, when viewing the stator yoke 60 via the teeth 180 from above the magnet-opposed end portion 183, the magnet-opposed end portion 183 intercepts the viewer and makes it difficult to recognize insertion holes 175 on the stator yoke 160 accurately.

Therefore, alignment of the portion 181 of the tooth 180 to be inserted into the yoke with the insertion hole 175 is difficult, which may make the assembling work complex.

However, according to the construction of the present embodiment, since the area and the width W7 of the magnet-opposed end portion 108 disposed outside the coil 62 are the same as the area and the width W7 of the portion 107 to be disposed in the coil, respectively, when viewing the stator yoke 60 from above the magnet-opposed end portion 108 via the teeth 101, the insertion holes 75 on the stator yoke 60 can be accurately recognized.

Therefore, the portion 106 of the teeth 101 to be inserted into the yoke may be inserted (press-fitted) in a state of being aligned accurately with the insertion hole 75, and subsequently, the bobbin 110, the coil 62 and the like may be disposed accurately from above the tooth 101 in sequence.

As a consequent, the assembling process of the stator 41 may further be simplified.

In the embodiment, the area and the width W7 of the magnet-opposed end portion 108 disposed outside the coil 62 of the respective teeth 101 are the same as the area and the width W7 of the portion 107 to be disposed in the coil, respectively. However, the present invention is not limited thereto, and the area and the width W7 of the magnet-opposed end portion 108 disposed outside the coil 62 of the respective teeth 101 may be smaller than the area and the width of the portion 107 to be disposed within the coil.

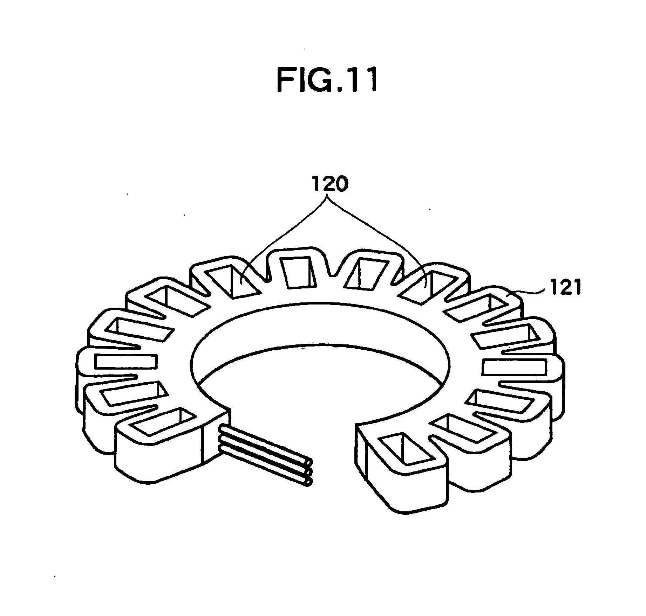

Furthermore, according to the embodiment, the coils 62 are wound around the respective teeth 101. However, in order to simplify the connecting work, as shown in Fig. 11, the coils 62 corresponding to all the teeth 101 are connected and joined in advance, and a molded integral coil 121 which is fixed with the resin mold so as to form teeth mounting holes 120 arranged in the shape of a partly removed circle corresponding to the shape of general arrangement of the teeth 101 (the shape of a partly-removed circle).

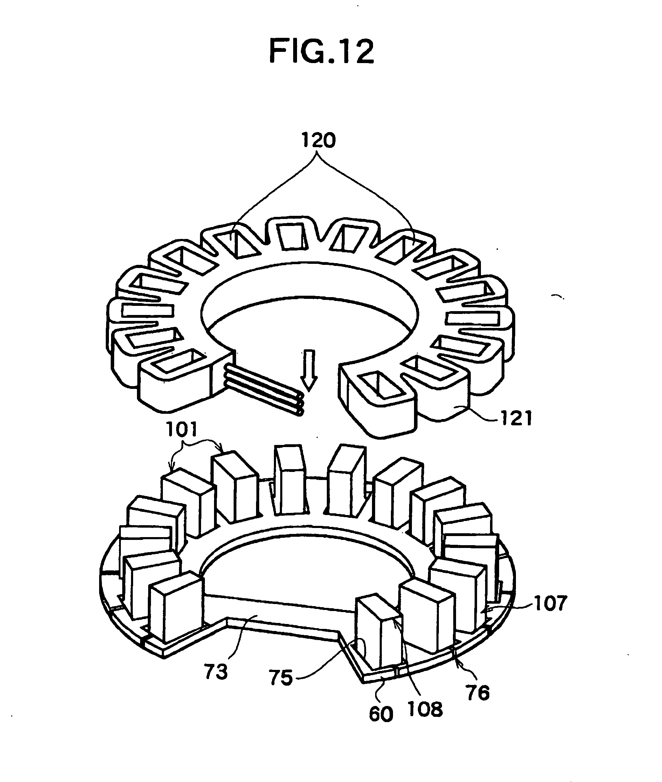

In this arrangement, as shown in Fig. 12, the stator 41 may be assembled by mounting the molded integral coil 121 to the stator yoke 60 so that the portions 107 of the teeth 101 to be disposed in the coils are inserted into the respective teeth mounting holes 120.

As a consequent, assembling of the coils may easily be achieved without performing difficult works such as coil connecting work or alignment among the plurality of teeth, whereby assembling process of the stator 41 may further be simplified.

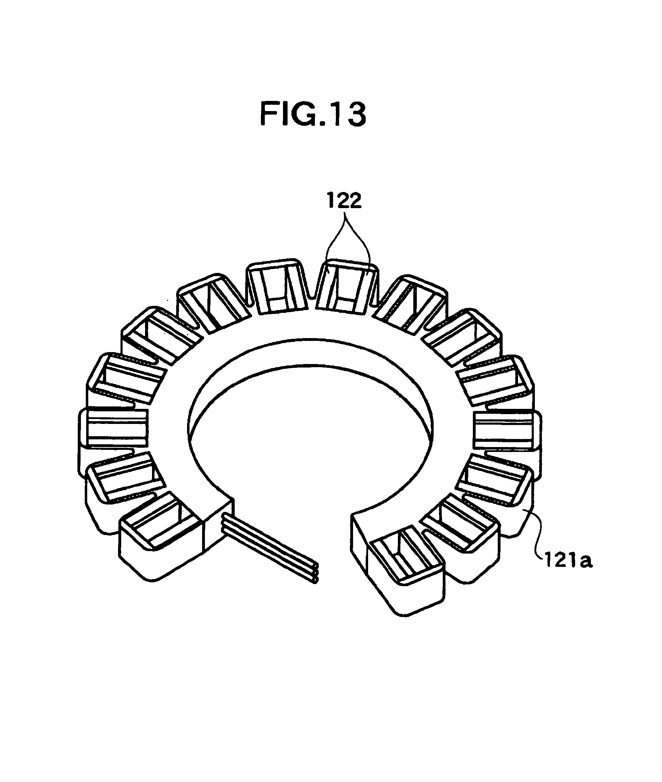

In addition, as a modification of the embodiment as shown in Fig. 13, cores 122 (iron core) are attached to the inner peripheral walls constituting the teeth mounting holes 120 of the molded integral coil 121 at the portions abutting against and opposing the side surfaces of the magnet-opposed end portions 108 of the teeth 101 when viewed in the laminating direction.

According to the arrangement shown in Fig. 13, when the molded integral coil 121a is mounted to the stator yoke 60 so that the portions 107 of the teeth 101 to be disposed within the coils may be inserted into the teeth mounting holes 120, the cores 122 serve also as magnet-opposed surfaces together with the magnet-opposed end portions 108 of the respective teeth 101. Therefore, in comparison with the construction shown in Fig. 9, more magnetic fluxes (lines of magnetic force) generated from the magnet 45 may be induced.

As a consequence, it contributes increased torque and reduced size of the electric motor 28 based on the stator 41 including the molded integral coil 121 a.

In the above-described embodiments, the width of the portion of the tooth to be inserted into the yoke is longer than the width of the portion to be disposed within the coil. However, the present invention is not limited thereto, and any shape of tooth may be applied as long as the cross-sectional area of the portion to be inserted into the yoke, which is taken perpendicularly to the lines of magnetic force generated when the corresponding coil is energized, is larger than the cross-sectional area perpendicular to the lines of magnetic force of the portion to be disposed within the coil.

In addition, in the third embodiment, the width of the magnet-opposed end portion of the tooth is the same as the width of the portion to be disposed within the coil. However, the present invention is not limited thereto, and any shape of the teeth may be applied as long as the cross-sectional area of the magnet-opposed end portion, which is taken perpendicularly with respect to the lines of magnetic force generated when the corresponding coil is energized, is smaller than the cross-sectional area of the portion to be disposed within the coil taken orthogonally with respect to the lines of magnetic force.

Furthermore, in the respective embodiments described above, the case in which the electric motor which corresponds to the axial gap dynamo-electric machine according to the present invention is mounted on the motorcycle has been described. However, the present invention is not limited thereto. It may be mounted on other types of apparatus/equipment, and the effects as described above may be achieved.

In addition, the case in which the axial gap dynamo-electric motor (electric motor) as an axial gap dynamo-electric machine according to the present invention has been described in the embodiments described above, the present invention is not limited thereto, and it is also used as so-called electric generator, which allows a coil to generate electromotive force by rotating the rotor from the outside.

In the above-described embodiments, the axial gap dynamo-electric machine has been described to have the rotor as a magnet side, and the stator as a coil side. However, the present invention is not limited thereto, and may have the stator as a magnet side and the rotor as a coil side, which achieves substantially the same effects as the embodiments described above.

As explained above, a dynamo-electric machine including a magnet for a magnetic field according to a first aspect may include a tooth disposed so as to oppose to the magnet at a predetermined gap being laminated in parallel with the direction of magnetic flux of the magnet, a coil having at least part of the tooth disposed therein, and a yoke disposed so as to oppose to the magnet and being laminated in the direction different from the direction of layer of the tooth, the yoke further preferably including an opening provided so as to face from the surface opposing to the magnet toward the opposite surface, wherein the tooth and the yoke are preferably fixed to each other in a state in which at least part of the tooth is inserted into the opening, and/or the cross-sectional area perpendicular to a line of magnetic force at the portion inserted into the opening is preferably larger than the cross-sectional area perpendicular to the line of magnetic force at a portion of the tooth stored in the coil when the coil is energized.

According to the dynamo-electric machine in a first aspect, since the cross-sectional area perpendicular to a line of magnetic force generated at the teeth inserted into the opening of the yoke is preferably larger than the cross-sectional area perpendicular to the line of magnetic force at a portion of the tooth stored in the coil when the coil is energized, the line of magnetic force (magnetic flux) leaked from the portion stored in the coil enters into the tooth inserted into the yoke.

Consequently, generation of eddy current caused by leaked magnetic flux can be restrained owing to the insulation resistance of the tooth inserted into the opening of the yoke in comparison with the case in which the leaked magnetic flux directly enters into the yoke.

Therefore, the iron loss based on the eddy current can be reduced, whereby efficiency of the dynamo-electric machine can be improved.

As mentioned above a dynamo-electric machine including a magnet for a magnetic field is provided.

Therein, preferably a tooth disposed so as to oppose to the magnet at a predetermined gap being laminated in parallel with the direction of magnetic flux of the magnet, a coil having at least part of the tooth disposed therein, and/or a yoke disposed so as to oppose to the magnet and being laminated in the direction different from the direction of layer of the tooth are provided.

Therein, preferably the yoke further includes an opening provided so as to face from the surface opposing to the magnet toward the opposite surface, the tooth and the yoke are fixed to each other in a state in which at least part of the tooth is inserted into the opening.

Further, preferably the cross-sectional area perpendicular to a line of magnetic force of the tooth at the portion inserted into the opening when the coil is energized is larger than the cross-sectional area perpendicular to the line of magnetic force at a portion of the tooth stored in the coil.

Preferably, the tooth is formed by laminating a plurality of steel plates each including a first portion to be inserted into the opening, a second portion to be inserted in the coil, and a third portion to connect the first and second portions, and in that the length of the first portion in the direction perpendicular to the magnetic flux of the magnet is longer than the length of the second portion perpendicular to the magnetic flux of the magnet.

Preferably, the plurality of the teeth are provided, and the plurality of the teeth are mounted to the yoke in a state in which the lines of magnetic force generated at the respective portions of the plurality of teeth stored within the coils when the coil is energized extend in parallel with each other.

Preferably, the cross-sectional area perpendicular to the line of magnetic force generated at the teeth at the magnet-opposed end portion of the tooth which opposes to the magnet when the coil is energized is smaller than the cross-sectional area perpendicular to the line of magnetic force at the teeth disposed in the coil.

Preferably, the plurality of the coils are provided and the plurality of teeth are at least partly stored within the plurality of coils.

Further, preferably the plurality of coils are integrally molded so that the lines of magnetic force at the respective portions of the plurality of teeth stored in the coils extend substantially in parallel with each other when the plurality of coils are energized.

Preferably, the magnet-opposed end portions of the plurality of teeth opposing to the respective magnets are disposed outside the plurality of coils, respectively.

Further, preferably a plurality of the cores disposed in the vicinity of the magnet-opposed end portion of the plurality of teeth opposing to the respective magnets are provided, and still further preferably the plurality of the cores and the plurality of coils are integrally molded.

Additionally or alternatively, a dynamo-electric machine having a magnet for a magnetic field is provided comprising: a tooth disposed so as to oppose to the magnet at a predetermined gap; and a coil having at least part of the tooth disposed therein.

Therein, preferably the cross-sectional area perpendicular to a line of magnetic force generated at the magnet-opposed end portion of the teeth opposing to the magnet is smaller than the cross-sectional area perpendicular to the line of magnetic force generated at the portion of the tooth to be disposed within the coil when the coil is energized.

A dynamo-electric machine further preferably comprises a yoke to which the tooth is to be fixed.

Preferably, the plurality of the teeth and the coils are provided, at least part of the respective teeth are stored within the corresponding coils respectively, the teeth are fixed to the yoke so that the lines of magnetic force generated at the portions of the respective teeth stored in the coils extend in substantially parallel with each other when the coils are energized, and/or the respective coils are integrally molded so that the lines of magnetic force generated at the portions of the respective teeth to be stored in the respective coils extend substantially in parallel with each other.

Preferably, the dynamo-electric machine comprises a plurality of cores disposed in the vicinity of the magnet-opposed end portion opposing to the respective magnets of the plurality of teeth, wherein the magnet-opposed end portions of the teeth opposing to the magnets are disposed outside the respective plurality of coils, wherein preferably the plurality of cores and the plurality of coils are integrally molded.

Preferably, the yoke is provided with openings formed from the surface opposing to the magnet toward the other surface, at least part of the respective teeth is fixed to the opening, in that the cross-sectional areas of the respective teeth perpendicular to the lines of magnetic force generated at the teeth disposed inside the opening is larger than the cross sectional area perpendicular to the lines of magnetic force at the portions of the teeth stored within the respective coils when the respective coils are energized.

The above description further discloses:

A dynamo-electric machine including a tooth opposing the magnet at a predetermined gap, a coil having at least part of the tooth disposed therein, and a yoke disposed so as to oppose the magnet, wherein the tooth is mounted to the yoke in such a manner that at least part thereof is inserted through the magnet opposed surface of the yoke, and the cross-sectional area of the tooth at the portion being inserted into the yoke, which is taken perpendicularly with respect to a line of magnetic force generated at the tooth when the coil is energized is larger than the cross-sectional area of the portion of the teeth disposed inside the coil, which is taken perpendicularly with respect to the line of magnetic force.

According to an embodiment, the tooth is formed by laminating a plurality of steel plates each having the portion to be inserted into the yoke and the portion to be disposed within the coil molded integrally with each other, and the width of the each steel plate at the portion to be inserted into the yoke when viewed in the direction of lamination is larger than the portion to be disposed within the coil when viewed in the direction of lamination.

Preferably, a plurality of teeth are provided, and the plurality of teeth are mounted to the yoke in such a manner that the lines of magnetic force generated at the portions of the plurality of teeth to be disposed within the coils when the coils are energized are substantially parallel with each other.

Preferably, the cross-sectional area of the magnet-opposed end portion of the tooth opposing the magnet, which is taken perpendicularly with respect to the line of magnetic force generated at the tooth when the coil is energized, is smaller than the cross-sectional area of the portion to be disposed within the coil, which is taken perpendicularly with respect to the line of magnetic force generated at the portion to be disposed within the coil.

Preferably, the plurality of coils are provided, and the plurality of teeth are disposed inside the plurality of coils at least partly, and the plurality of coils are integrally molded in such a manner that the lines of magnetic force generated at the portions of the plurality of teeth disposed within the respective coils are parallel with each other when the plurality of coils are energized.

Preferably, the magnet-opposed end portions of the plurality of teeth facing the magnet are located outside the plurality of coils, a plurality of cores are disposed in the vicinity of the magnet-opposed end portions of the plurality of teeth opposing the magnet, and the plurality of cores and the plurality of coils are integrally molded.

Besides, the above description discloses a dynamo-electric machine additionally or alternatively having a magnet for a magnetic field, including a tooth opposing the magnet at a predetermined gap, and a coil having at least part of the tooth disposed therein, wherein the cross-sectional area of the magnet-opposed end portion of the tooth opposing the magnet, which is taken perpendicularly with respect to the line of magnetic force generated at the tooth when the coil is energized, is smaller than the cross-sectional area of the portion to be disposed within the coil, which is taken perpendicularly with respect to a line of magnetic force generated at the portion to be disposed within the coil.

Preferably, the plurality of teeth and cores are provided respectively, and the plurality of teeth are disposed at least partly within the plurality of coils, respectively, and a yoke having the plurality of teeth mounted thereon in such a manner that the lines of magnetic force generated at the portions of the plurality of teeth provided within the coils when the plurality of coils are energized are substantially parallel with each other is provided, and the plurality of coils are integrally molded in a state in which the lines of magnetic force generated at the portions of the plurality of teeth provided within the coils are substantially parallel with each other.

Preferably, the magnet-opposed end portions of the plurality of teeth opposing the magnet are located outside the plurality of coils, a plurality of cores are disposed in the vicinity of the magnet-opposed end portions of the plurality of teeth opposing the magnet, and the plurality of cores and the plurality of coils are integrally molded.

Preferably, the plurality of teeth are mounted to the yoke in a state in which at least parts thereof are inserted into the yoke through the magnet-opposed surface of the yoke, and the cross-sectional areas of the respective teeth at the portion being inserted into the stator yoke, which are taken perpendicularly with respect to the lines of magnetic force generated at the respective teeth when the respective coils are energized, are larger than the cross-sectional area of the portions of the respective teeth disposed inside the respective coils, which is taken perpendicularly with respect to the lines of magnetic force.

As described thus far, in the dynamo-electric machine according to an embodiment, since the cross-sectional areas of the teeth at the portions being inserted into the yoke, which are taken perpendicularly with respect to the lines of magnetic force generated at the teeth when the coils are energized, are larger than the cross-sectional area of the teeth at the portions to be disposed within the coils, which is taken perpendicularly with respect to the lines of magnetic force, the lines of magnetic force (magnetic flux) leaked from the portions disposed within the coils proceed to the portions of the teeth inserted into the yoke.

As a consequence, in comparison with the case in which the leaked magnetic flux is proceeded directly to the yoke, generation of an eddy current caused by the leaked magnetic flux may be restrained by insulation resistances at the portions of the teeth being inserted into the yoke.

Therefore, iron loss due to an eddy current may be reduced, and thus the efficiency of the dynamo-electric machine may be improved.

According to any of the embodiments, since the cross-sectional area of the magnet-opposed end portions of the teeth opposing to the magnet, which is taken perpendicularly with respect to the lines of magnetic force generated at the teeth when the coils are energized is smaller than the cross-sectional area of the portion to be disposed within the coils, which is taken perpendicularly with respect to the lines of magnetic force generated at the portions to be disposed within the coils, the teeth and insertion holes may easily be aligned, for example, when inserting the teeth into the insertion holes on the yoke, whereby assembling process of the dynamo-electric machine employing the teeth may be simplified.

As explained above, according to an aspect of the invention, generation of an eddy current caused by leaked magnetic flux can be retrained and iron loss due to the eddy current can be reduced. Therefore, a dynamo-electric machine comprises a tooth 61 mounted to a stator yoke 60 in a state in which at least part of it (a portion 81 to be inserted into the yoke) is inserted into an insertion hole 75 formed through the magnet-opposed surface of the stator yoke 60, and a cross-sectional area S1 (See Fig. 6A) of the portion 81 of the tooth 61 to be inserted into the yoke, which is taken perpendicularly with respect to lines of magnetic force B1 generated at the tooth 61 when a coil 62 is energized, which is larger than the cross-sectional area S2 (See Fig. 6B) of the portion 82 to be disposed within the coil of the tooth 61, which is taken perpendicularly with respect to the lines of the magnetic force B1.

## Claims

1. Dynamo-electric machine of the axial gap type comprising a rotor (40) having a yoke (42) and a magnet (45) mounted thereon for creating a magnetic field and a stator (41) including,
a plurality of teeth (61,91,101) facing the magnet (45) axially at a predetermined gap, each tooth having a one-end portion (83,98,108) facing the magnet, a mid section portion (82, 97, 109) around which a coil is wound and an other end portion (81, 96, 106), the stator further including
a yoke (60,92) having an opening (75,93) for each of the stator teeth (61,81,101) wherein said other end portion (81, 96,106) of the tooth (61,91,101) is inserted, wherein
the cross-sectional area (S1) of the other end portion (81,96,106) of the tooth (61,91,101) inserted into the opening (75,93) of the yoke (60,92) is larger than the cross-sectional area (S2) of the mid section portion (82,97,107) of the tooth (61,91,101) disposed within the coil (62,121,121a), said cross sectional areas (S1, S2) being taken perpendicularly to the lines of magnetic force when the coil (62,121,121a) is energised.

2. Dynamo-electric machine of the axial gap type according to claim 1, wherein the tooth (61,91,101) is laminated in parallel with a direction of magnetic flux (B1,B3,B5) of the magnet (45), and the yoke (60,92) is laminated in a direction different from the laminating direction of the tooth (61,91,101).

3. Dynamo-electric machine of the axial gap type according to claim 1 or 2, wherein the opening (75,93) is provided at the yoke (60,92) so as to face from the surface of the yoke (60,92) opposing to the magnet (45) toward the opposite surface of the yoke (60,92).

4. Dynamo-electric machine of the axial gap type according to at least one of the claims 1 to 3, wherein the tooth (61,91,101) is formed by laminating a plurality of steel plates (80,95,102) each including a first portion (81,96,106) to be inserted into the opening (75,93), a second portion (82,97,107) to be inserted in the coil (62,121,121a), and a third portion (83,98,108) connected to the second portion, wherein length (W1,W4,W8) of the first portion (81,96,106) in the direction perpendicular to the magnetic flux (B1,B3,B5) of the magnet (45) is longer than the length (W2,W5,W7) of the second portion (82,97,107) perpendicular to the magnetic flux (B1,B3,B5) of the magnet (45).

5. Dynamo-electric machine of the axial gap type according to at least one of the claims 1 to 4, wherein a cross-sectional area perpendicular to the line of magnetic force generated at the tooth (61,91,101) at the magnet-opposed end portion (83,98,108) of the tooth (61,91,101) which opposes to the magnet (45) when the coil (62,121,121 a) is energized is smaller than the cross-sectional area perpendicular to the line of magnetic force at the tooth disposed in the coil (62,121,121 a) or is smaller than the cross-sectional area perpendicular to the line of magnetic force at the tooth disposed in the yoke (60,92).

6. Dynamo-electric machine of the axial gap type according to at least one of the claims 1 to 5, wherein a plurality of the teeth (61,91,101) is provided, wherein the plurality of the teeth (61,91,101) are mounted to the yoke (60,92) in a manner in which the lines of magnetic force generated at the respective portions (82,97,107) of the plurality of teeth (61,91,101) stored within the coils (62,121,121 a) when the coils (62) are energized extend in parallel with each other.

7. Dynamo-electric machine of the axial gap type according to claim 6, wherein a plurality of coils (62,121,121a) are provided and the plurality of teeth (61,91,101) are at least partly stored within the plurality of coils (62,121,121 a), wherein the plurality of coils (62,121,121a) are integrally molded so that the lines of magnetic force at the respective portions of the plurality of teeth (61,91,191) stored in the coils (62,121,121a) extend substantially in parallel with each other when the plurality of coils (62,121,121 a) are energized.

8. Dynamo-electric machine of the axial gap type according to claim 7, wherein magnet-opposed end portions (83,98,108) of the plurality of teeth (61,91,101) opposing to the respective magnets (45) are disposed outside the plurality of coils (62,121,121 a), respectively.

9. Dynamo-electric machine of the axial gap type according to claim 8, wherein a plurality of cores (122) disposed in the vicinity of the magnet-opposed end portions (83,98,108) of the plurality of teeth (61,91,101) opposing to the respective magnets (45) are provided.

10. Dynamo-electric machine of the axial gap type according to claim 9, wherein the plurality of the cores (122) and the plurality of coils (62,121,121 a) are integrally molded.

11. Dynamo-electric machine of the axial gap type according to at least one of the claims 1 to 10, wherein a cross-sectional area perpendicular to a line of magnetic force (B1,B3,B5) generated at a magnet-opposed end portion (83,98,108) of the tooth (61,91,101) opposing to the magnet (45) is smaller than or equal to the cross-sectional area perpendicular to the line of magnetic force (B1,B3,B5) generated at the portion (82,97,107) of the tooth (61,91,101) disposed within the coil (62,121,121 a) when the coil (62,121,121 a) is energized.

12. Dynamo-electric machine of the axial gap type according to at least one of the claims 1 to 11, wherein the direction of layer of the tooth (61,91,101) is perpendicular to or parallel to a radial direction which is substantially perpendicular to an axis of rotation (BO) of the dynamo-electric machine (28).

## Patentansprüche

1. Dynamo- elektrische Maschine des Axialspalt- Typs, aufweisend einen Rotor (40) mit einem Joch (42) und einem daran montierten Magnet (45) zum Erzeugen eines magnetischen Feldes, und einen Stator, enthaltend:
eine Mehrzahl von Zähnen (61, 91, 101), die dem Magneten (45) axial mit einem vorbestimmten Spalt zugewandt sind, wobei jeder Zahn, der einen Ein- Endabschnitt (83, 98, 108) hat, der dem Magnet zugewandt ist, ein mittleres Abschnittsteil (82, 97, 109), um das eine Wicklung gewickelt ist und einen anderen Endabschnitt (81, 96, 106), wobei der Stator außerdem enthält ein Joch (60, 92) mit einer Öffnung (73, 93) für jeden der Statorzähne (61, 91, 101), in der der andere Endabschnitt (81, 96, 106) des Zahnes (61, 91, 101) eingesetzt ist, wobei
die Querschnittsfläche (S1) des anderen Endabschnittes (81, 96, 106) des Zahnes (61, 91, 101), eingesetzt in die Öffnung (75, 93) des Jochs (60, 92), größer ist als eine Querschnittsfläche (S2) des mittleren Abschnittsteils (82, 97, 107) des Zahnes (61, 91, 101), angeordnet innerhalb der Wicklung (62, 121, 121 a), wobei die Querschnittsflächen (S1, S2) rechtwinklig zu den Magnetkraftlinien betrachtet werden, wenn die Wicklung (62, 121, 121 a) erregt ist.

2. Dynamo- elektrische Maschine des Axialspalt- Typs nach Anspruch 1, wobei der Zahn (61, 91, 101) parallel zu einer Richtung des magnetischen Flusses (81, 83, 85) des Magneten (45) laminiert ist, und das Joch (60, 92) in einer Richtung, die von der Laminierungsrichtung des Zahnes (61, 91, 101) verschieden ist, laminiert ist.

3. Dynamo- elektrische Maschine des Axialspalt- Typs nach Anspruch 1 oder 2, wobei die Öffnung (75, 93) an dem Joch (60, 92) geschaffen ist, um sich von der Oberfläche des Jochs (60, 92), die dem Magnet (45) in Richtung zu der gegenüberliegenden Oberfläche des Jochs (60, 92) gegenüberliegt, zuzuwenden.

4. Dynamo- elektrische Maschine des Axialspalt- Typs nach zumindest einem der Ansprüche 1 bis 3, wobei der Zahn (61, 91, 101) gebildet ist durch Laminieren einer Mehrzahl von Stahlplatten (80, 95, 102), wobei jede einen ersten Abschnitt (81, 98, 106) enthält, um eingesetzt zu werden in die Öffnung (75, 93), einen zweiten Abschnitt (82, 97, 107), um in die Wicklung (62, 121, 121 a) eingesetzt zu werden, und einen dritten Abschnitt (83, 98, 108), verbunden mit dem zweiten Abschnitt, wobei die Länge (W1, W4, W8) des ersten Abschnittes (81, 96, 108) in der Richtung rechtwinklig zu dem Magnetfluss (B1, B3, B5) des Magneten (45) länger ist als die Länge (W2, W5, W7) des zweiten Abschnittes (82, 97, 107), rechtwinklig zu dem magnetischen Fluss (B1, B3, B5) des Magneten (45).

5. Dynamo- elektrische Maschine des Axialspalt- Typs nach zumindest einem der Ansprüche 1 bis 4, wobei eine Querschnittsfläche rechtwinklig zu der magnetischen Kraftlinie, erzeugt an dem Zahn (61, 91, 101) an dem dem Magneten gegenüberliegenden Endabschnitt (83, 98, 108) des Zahnes (61, 91, 101), der dem Magneten (45) gegenüberliegt, wenn die Wicklung (62, 121, 121a) erregt ist, kleiner ist als die Querschnittsfläche rechtwinklig zu der magnetischen Kraftlinie an dem Zahn, angeordnet in der Wicklung (62, 121, 121 a), oder kleiner ist, als die Querschnittsfläche, rechtwinklig zu der magnetischen Kraftlinie an dem Zahn, angeordnet in dem Joch (60, 92).

6. Dynamo- elektrische Maschine des Axialspalt- Typs nach zumindest einem der Ansprüche 1 bis 5, wobei eine Mehrzahl von Zähnen (61, 91, 101) vorgesehen ist, wobei die Mehrzahl von Zähnen (61, 91, 101) an dem Joch (60, 92) in einer Weise montiert ist, dass sich die magnetischen Kraftlinien, erzeugt an den jeweiligen Abschnitten (82, 97, 107) der Mehrzahl von Zähnen (61, 91, 101), untergebracht innerhalb der Wicklungen (62, 121, 121 a), wenn die Wicklungen (62) erregt sind, sich parallel zueinander erstrecken.

7. Dynamo- elektrische Maschine des Axialspalt- Typs nach Anspruch 6, wobei eine Mehrzahl von Wicklungen (62, 121, 121a) vorgesehen ist und die Mehrzahl von Zähnen (61, 91, 101) zumindest teilweise innerhalb der Mehrzahl von Wicklungn (62, 121, 121 a) untergebracht ist, wobei die Mehrzahl von Wicklungen (62, 121, 121a) einstückig geformt ist, so das sich die magnetischen Kraftlinien an den jeweiligen Abschnitten der Mehrzahl von Zähnen (61, 91, 101), untergebracht in den Wicklungen (62, 121, 121a), im Wesentlichen parallel zueinander erstrecken, wenn die Mehrzahl von Wicklungen (62, 121, 121a) erregt ist.

8. Dynamo- elektrische Maschine des Axialspalt- Typs nach Anspruch 7, wobei die dem Magneten gegenüberliegenden Endabschnitte (83, 98, 108) der Mehrzahl von Zähnen (61,91,101), die den jeweiligen Magneten (45) gegenüberliegen, jeweils außerhalb der Mehrzahl von Wicklungen (62, 121, 121a) angeordnet sind.

9. Dynamo- elektrische Maschine des Axialspalt- Typs nach Anspruch 8, wobei eine Mehrzahl von Kernen (122), angeordnet in der Nähe der dem Magneten gegenüberliegenden Endabschnitte (83, 98, 108) der Mehrzahl von Zähnen (61, 91, 101), die den jeweiligen Magneten (45) gegenüberliegen, vorgesehen ist.

10. Dynamo- elektrische Maschine des Axialspalt- Typs nach Anspruch 9, wobei die Mehrzahl von Kernen (122) und die Mehrzahl von Wicklungen (62, 121, 121 a) einstückig geformt sind.

11. Dynamo- elektrische Maschine des Axialspalt- Typs nach zumindest einem der Ansprüche 1 bis 10, wobei eine Querschnittsfläche rechtwinklig zu einer magnetischen Kraftlinie (B1, B3, B5), erzeugt an dem dem Magneten gegenüberliegenden Endabschnitt (83, 98, 108) der Zähne (61, 91, 101), der dem Magneten (45) gegenüberliegt, kleiner als oder gleich ist zu der Querschnittsfläche rechtwinklig zu der magnetischen Kraftlinie (B1, B3, B5), erzeugt an dem Abschnitt (82, 97, 107) des Zahnes (61, 91, 101), angeordnet innerhalb der Wicklung (62, 121, 121 a), wenn die Wicklung (62, 121, 121a) erregt ist.

12. Dynamo- elektrische Maschine des Axialspalt- Typs nach zumindest einem der Ansprüche 1 bis 11, wobei die Schichtrichtung des Zahnes (61, 91, 101) rechtwinklig zu oder parallel zu einer radialen Richtung ist, die im Wesentlichen rechtwinklig zu einer Drehachse (BO) der dynamo- elektrischen Maschine (28) ist.

## Revendications

1. Machine dynamo-électrique du type à espace axial, comprenant un rotor (40) sur lequel sont montés une culasse (42) et un aimant (45) pour créer un champ magnétique, et
un stator (41) contenant
plusieurs dents (61, 91, 101) qui font face à l'aimant (45) axialement avec un espace prédéterminé, chaque dent ayant une partie d'extrémité (83, 98, 108) qui fait face à l'aimant, une partie de section centrale (82, 97, 109) autour de laquelle est enroulée une bobine, et une autre partie d'extrémité (81, 96, 106), le stator contenant également
une culasse (60, 92) qui présente une ouverture (75, 93) pour chacune des dents de stator (61, 81, 101), étant précisé que l'autre partie d'extrémité (81, 96, 106) de la dent (61, 91, 101) est insérée, étant précisé que
la surface de section transversale (S1) de l'autre partie d'extrémité (81, 96, 106) de la dent (61, 91, 101) insérée dans l'ouverture (75, 93) de la culasse (60, 92) est plus grande que la surface de section transversale (S2) de la partie de section centrale (82, 97, 107) de la dent (61, 91, 101) disposée à l'intérieur de la bobine (62, 121, 121a), lesdites surfaces de section transversale (S1, S2) étant perpendiculaires aux lignes de la force magnétique quand la bobine (62, 121, 121a) est excitée.

2. Machine dynamo-électrique du type à espace axial selon la revendication 1, étant précisé que la dent (61, 91, 101) est stratifiée parallèlement à une direction du flux magnétique (B1, B3, B5) de l'aimant (45), et la culasse (60, 92) est stratifiée dans une direction différente de la direction de stratification de la dent (61, 91, 101).

3. Machine dynamo-électrique du type à espace axial selon la revendication 1 ou 2, étant précisé que l'ouverture (75, 93) est prévue sur la culasse (60, 92) de manière à être dirigée, à partir de la surface de la culasse (60, 92) opposée à l'aimant (45), vers la surface opposée de la culasse (60, 92).

4. Machine dynamo-électrique du type à espace axial selon l'une au moins des revendications 1 à 3, étant précisé que la dent (61, 91, 101) est formée grâce à la stratification de plusieurs plaques d'acier (80, 95, 102) qui présentent chacune une première partie (81, 96, 106) à insérer dans l'ouverture (75, 93), une deuxième partie (82, 97, 107) à insérer dans la bobine (62, 121, 121a), et une troisième partie (83, 98, 108) reliée à la deuxième partie, étant précisé que la longueur (W1, W4, W8) de la première partie (81, 96, 106), dans la direction perpendiculaire au flux magnétique (B1, B3, B5) de l'aimant (45), est plus grande que la longueur (W2, W5, W7) de la deuxième partie (82, 97, 107) perpendiculairement au flux magnétique (B1, B3, B5) de l'aimant (45).

5. Machine dynamo-électrique du type à espace axial selon l'une au moins des revendications 1 à 4, étant précisé qu'une surface de section transversale perpendiculaire à la ligne de la force magnétique générée au niveau de la dent (61, 91, 101) sur la partie d'extrémité (83, 98, 108) de la dent (61, 91, 101) opposée à l'aimant (45) quand la bobine (61, 121, 121a) est excitée, est plus petite que la surface de section transversale perpendiculaire à la ligne de la force magnétique au niveau de la dent disposée dans la bobine (62, 121, 121a), ou est plus petite que la surface de section transversale perpendiculaire à la ligne de la force magnétique au niveau de la dent disposée dans la culasse (60, 92).

6. Machine dynamo-électrique du type à espace axial selon l'une au moins des revendications 1 à 5, étant précisé que plusieurs dents (61, 91, 101) sont prévues, et que ces dents (61, 91, 101) sont montées sur la culasse (60, 92) de telle sorte que les lignes de la force magnétique générée au niveau des parties respectives (82, 97, 107) des dents (61, 91, 101) logées à l'intérieur des bobines (62, 121, 121a) quand les bobines (62) sont excitées s'étendent parallèlement les unes aux autres.

7. Machine dynamo-électrique du type à espace axial selon la revendication 6, étant précisé que plusieurs bobines (62, 121, 121a) sont prévues, et les dents (61, 91, 101) sont au moins en partie logées à l'intérieur des bobines (61, 121, 12a), étant précisé que les bobines (62, 121, 121a) sont moulées d'une seule pièce de telle sorte que les lignes de la force magnétique des parties respectives des dents (61, 91, 191) logées dans les bobines (62, 121, 121a) s'étendent globalement parallèlement les unes aux autres quand les bobines (62, 121, 121a) sont excitées.

8. Machine dynamo-électrique du type à espace axial selon la revendication 7, étant précisé que les parties d'extrémité (83, 98, 108) des dents (61, 91, 101) qui sont opposées aux aimants (45) respectifs sont disposées à l'extérieur des bobines (62, 121, 121a), respectivement.

9. Machine dynamo-électrique du type à espace axial selon la revendication 8, étant précisé qu'il est prévu plusieurs noyaux (122), qui sont disposés près des parties d'extrémité (83, 98, 108) des dents (61, 91, 101) opposées aux aimants (45) respectifs.

10. Machine dynamo-électrique du type à espace axial selon la revendication 9, étant précisé que les noyaux (122) et les bobines (62, 121, 121a) sont moulés d'une seule pièce.

11. Machine dynamo-électrique du type à espace axial selon l'une au moins des revendications 1 à 10, étant précisé qu'une surface de section transversale perpendiculaire à une ligne de force magnétique (B1, B3, B5) générée au niveau d'une partie d'extrémité (83, 98, 108) de la dent (61, 91, 101) opposée à l'aimant (45) est plus petite ou égale à la surface de section transversale perpendiculaire à la ligne de force magnétique (B1, B3, B5) générée au niveau de la partie (82, 97, 107) de la dent (61, 91, 101) qui est disposée à l'intérieur de la bobine (62, 121, 121a) quand la bobine (62, 121, 121a) est excitée.

12. Machine dynamo-électrique du type à espace axial selon l'une au moins des revendications 1 à 11, étant précisé que la direction de la stratification de la dent (61, 91, 101) est perpendiculaire ou parallèle à une direction radiale qui est globalement perpendiculaire à un axe de rotation (BO) de la machine dynamo-électrique (28).
